## Europäisches Patentamt

## European Patent Office

## Office européen des brevets

(19)

(11) Publication number: **0 246 425 B1**

# EUROPEAN PATENT SPECIFICATION

(12)

(45) Date of publication of the patent specification:
24.10.90

(51) Int. Cl.⁵: **H04B 3/23**

(21) Application number: 87104434.3

(22) Date of filing: 25.03.87

(54) Apparatus for cancelling echoes in a duplex digital transmission system.

(30) Priority: 27.03.86 IT 6724986

(43) Date of publication of application:
25.11.87 Bulletin 87/48

(45) Publication of the grant of the patent:
24.10.90 Bulletin 90/43

(84) Designated Contracting States:
CH DE FR GB LI NL SE

(56) References cited:
EP-A- 0 137 508

IEEE GLOBAL TELECOMMUNICATIONS
CONFERENCE, GLOBECOM '83, San Diego,
California, 28th November - 1st December 1983, vol. 2,
pages 29.4.1-29.4.5, IEEE, New York, US; D.J.
ROBERTSON et al.: "Analysis and simulation of
improved echo canceller adaptation algorithms with
single-bit correlation multipliers" con" die
Sicherheitstechnik beim Umgang mit Braun 000
SECOND INTERNATIONAL CONFERENCE ON
TELECOMMUNICATION TRANSMISSION - INTO THE
DIGITAL ERA, 17th-20th March 1981, pages 201-204,
London, GB; P.F. ADAMS et al.: "Echo cancellation
applied to WAL 2 digital transmission in the local
network"

(73) Proprietor: SIP Società Italiana per l'Esercizio
Telefonico p.a., Via San Dalmazzo, 15, I-10122 Turin(IT)

(72) Inventor: Ambrosio, Renato, Via Trotta, 17, San Raffaele
Cimena Torino(IT)
Inventor: Mogavero, Bruno Carlo, Via Guido Reni, 96/84,
Torino(IT)
Inventor: Paschetta, Giorgio, Via Cervere, 6, Sommariva
del Bosco Cuneo(IT)
Inventor: Tofanelli, Adler, Via Magneta, 20, Collegno
Torino(IT)

(74) Representative: Riederer Freiherr von Paar zu Schönau,
Anton et al, Van der Werth, Lederer & Riederer
Freyung 615 Postfach 2664, D-8300 Landshut(DE)

## Description

The present invention concerns digital speech and data transmission on the subscriber's line and more particularly it regards some improvements to echo cancellers for bidirectional digital transmission systems.

A significant role in the development of integrated service digital network (ISDN) is that of 144 kbit/s transmission technique, to be used for the access by the subscriber. This technique, in fact, is to ensure a low error rate and low spectral contents at high frequencies to avoid the inconveniences due to crosstalk, is to be compatible with HiFi diffusive services and is to allow integration of the whole system so as to reduce costs and consumption and to increase reliability.

One of the main problems encountered in echo-cancellation transmission techniques is the necessity to ensure a useful-signal/residual-echo ratio (S/N) of at least 20-25 dB, so as to allow correct reception.

This S/N ratio is particularly difficult to obtain when the system is to operate also with a 40 dB line attenuation. In fact hybrid matching to the line seldom exceeds 10 dB, that is why to reach the desired S/N ratio value, an echo suppression of at least 50-55 dB is necessary.

Echo estimate and cancellation are generally performed by a transverse or memory type structure, eg as described in the article by P. Adams et al from the Second International Conference on Telecommunication, 17th–20th March 1981, pages 201–204, which can ensure the desired accuracy to the samples on which they operate.

As known, memory structures can recover even non-linear distortions present in transmission and reception circuits, while the transverse type ones are profitably used to cancel echo portions which do not affect these types of distortions, as they require simpler circuits.

However, to attain global cancelling values of 50-55 dB, it is necessary to estimate and cancel the echo on a very high number of samples, since it has tails extending over a very long time interval. The use of transverse or memory cancellers for this aim is extremely burdensome, in fact it is necessary to operate on a very high number of samples, 25 to 35; what entails, besides increased circuit complexity, also considerably higher processing speed, which hinders the system implementation in CMOS technology.

The latter feature is to be carefully considered, since CMOS technology is nowadays the only one capable to meet a number of requirements such as low consumption and high integration density, which can allow ISDN development.

The above disadvantages are overcome by the improvements provided by the invention, which by echo cancellation in the last part of its pulse response, allow the obtention of 50-55 dB of signal-to-residual echo ratio demanded in case of maximum-length link.

The invention, based on the behaviour of echo-channel pulse-response, allows considerable simplification of electrical circuits if compared to those necessary with memory or transverse type cancellers without increasing the internal operation speed.

Besides, the simplicity of the solution easies the circuit implementation as an integrated circuit.

The present invention provides improvements to echo cancellers for bidirectional digital transmission systems such as described in claim 1.

The foregoing and other characteristics of the present invention will be made clearer by the following description of a particular embodiment of the same, given by way of non-limiting example, and by the annexed drawings, in which:

- Fig. 1 represents a transmission channel pulse response;
- Fig. 2 is a block diagram of the circuit provided by the invention;
- Fig. 3 represents the pulse response of a transmission channel with and without the circuit provided by the invention.

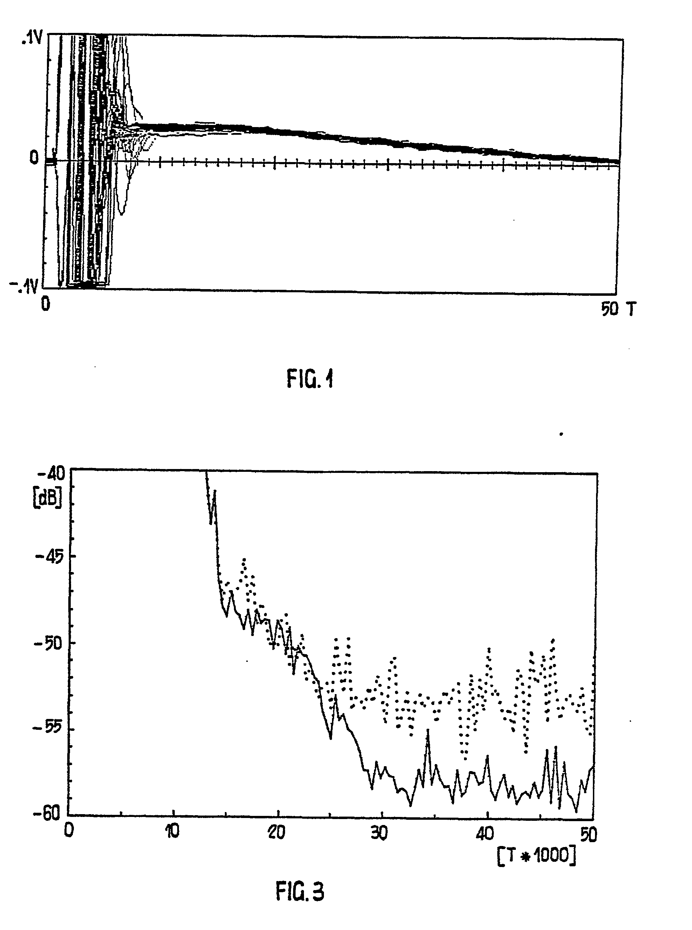

As known, echo-channel pulse response after a first extremely irregular and variable phase, which is a function of the hybrid unbalance, of the line type and of connection topology, has in its final part a quasi-linearly decreasing tail. Fig. 1, relating to some kinds of cables, of subscriber's lines and of connection topological configurations, shows the amplitude in function of time, subdivided into signalling periods.

This particular tail of pulse response does not depend on the line, in fact the Figure shows also the case of a channel consisting of a resistive termination, but solely of the characteristics of hybrid transformer.

As it can be noted from this Figure, the amplitude of the tails is still at such a level that requires their cancellation to reach convenient values of residual-echo-to-signal ratio, even in case of maximum length.

Even though tails only depend on hybrid transformer, they are still random variables, owing to the characteristics of the hybrid itself. In fact, these characteristics can vary either in function of tolerances in the production process or owing to the use of different materials. It is hence necessary to use an adaptive technique for their estimate and cancellation.

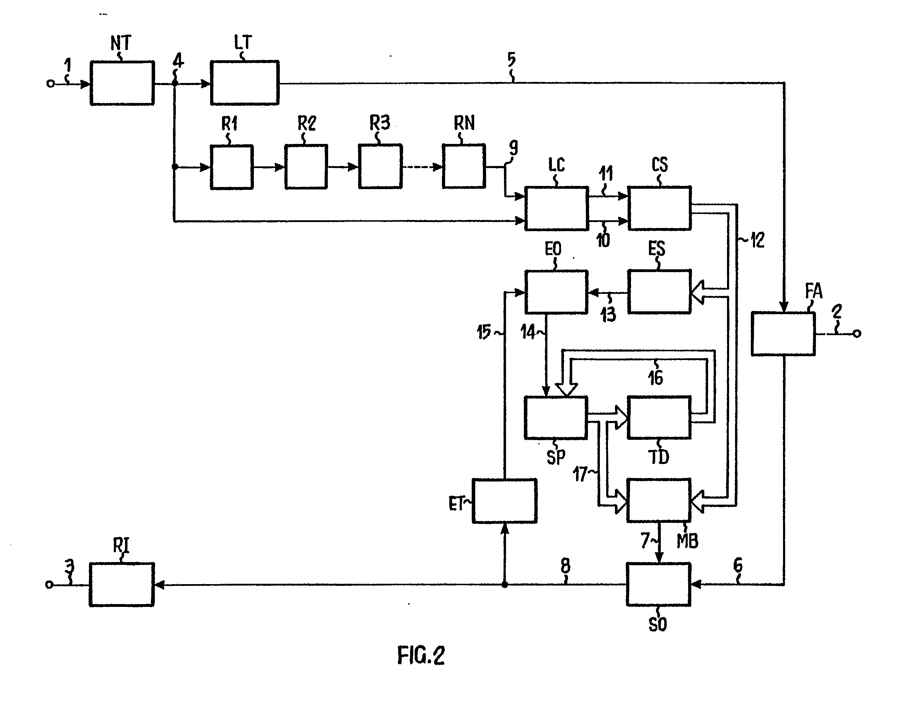

A bidirectional digital transmission system, comprising the improvements provided by the invention, is shown in Fig. 2.

Reference 1 denotes the wire whereon the binary signal to be transmitted arrives, 2 the transmission line and 3 the wire whereupon received signals become available.

The transmitter is represented as subdivided into two blocks NT and LT, where the linear and non-linear parts of line encoding are effected. The encoding is generally based on a three-level code of AMI type. As known, the non-linear part effects a precoding whose aim is that of avoiding error propagation. In fact, since the linear encoding effected in LT is a differential encoding, an erroneous decision in the interpretation of a binary signal would cause the emission of subsequent erroneous signals.

On wire 4, at NT output, a signal linearly related to the signal sent onto the line is then available and hence a signal which can be used for the estimate of the echo signal to be cancelled. The signal outgoing from LT reaches through wire 5 hybrid transformer FA and transmission line 2.

The signal coming from the remote transmitter and the echo-signal of local transmitter NT-LT pass through hybrid FA to wire 6, connected to an input of adder SO.

At the other input, connected to wire 7, the estimated echo signal is present, which is locally generated with a sign opposite to the echo signal received on wire 6. As a consequence, over wire 8 the echo-deprived useful signal is obtained as an addition effect and is sent to receiver RI to be decoded.

Let us now examine how echo signal $\hat{e}_k$ for tail cancellation is estimated at instant k.

It is calculatd as a prcduct between the estimated sample of the pulse response of the echo channel, $\hat{h}^k$ and the summation of symbols b transmitted during the N preceding signalling periods, whose echo queues are to be cancelled.

The relation is the following:

$$\hat{e}_k = \hat{h}^k \cdot \sum b_{k-i} \qquad (1)$$

The value of $\hat{h}^k$ is to be estimated in an adaptive way so that the system might match to hybrid having different characteristics. By using the sign iterative-stochastic algorithm, we obtain

$$\hat{h}^k = \hat{h}^{k-1} + \mathrm{sgn}\left( \sum_{i=0}^{N} b_{k-i} \right) \cdot \mathrm{sgn}\left( e_{k-1} - \hat{e}_{k-1} \right) \cdot D \qquad (2)$$

where $e_{k-1}$ is the echo signal received at instant k-1, D is a suitable coefficient lower than 1, which is to ensure the estimate convergence and of course sgn is the sign extracting function.

It can be noticed that the argument of the first function sgn in the relation (2) is equal to the second factor of the relation (1). According to the invention, this summation is not calculated by executing N additions every signalling period, but by simply incrementing or decrementing the preceding result in function of the logic level of the binary signal transmitted at the present instant, $b_k$, and of that of the binary signal transmitted N signalling periods before, $b_{k-N}$.

To obtain that, precoded signal $b_k$, present on wire 4, is sent both to a shift register consisting of N cells R1, R2, R3...RN, where N is the duration, expressed in signalling periods, of the pulse response of the echo to be cancelled, and to a logic circuit LC. At the other input of LC, connected to wire 9, signal $b_{k-N}$ is present, extracted from the last cell RN of the shift register. The signals at the outputs connected to wires 10 and 11 depend on those at the input according to the following relation:

| $b_k$ | $b_{k-N}$ | 10 | 11 |
|---|---|---|---|
| 0 | 0 | 1 | – |
| 0 | 1 | 0 | 0 |
| 1 | 1 | 1 | – |
| 1 | 0 | 0 | 1 |

They are used to control an up/down counter CS, which can be saturated to a maximum counting value N.

More particularly, the signal on wire 10 enables the counter CS when at low logic level, and the signal on wire 11 controls up/down counting, according to high or low logic level.

Since CS is a saturable counter, by exploiting the characteristics of line signals with long sequences

of binary 1s, corresponding to the absence of a signal during the initial activation phase or in the transmission frame, both counter CS and shift register R1,...RN need not be initialised, but they have self-positioning characteristics.

At CS output on connection 12, the summation of the signals transmitted in the last N signalling periods is then available, its sign is detected by a sign extracting circuit ES and is sent via wire 13 to a multiplying circuit EO, advantageously implemented with a logic EX-OR circuit.

This multiplying circuit receives also the sign of the difference between the estimated echo signal and the actual echo signal, supplied by the sign extracting circuit ET on wire 15.

The result of the multiplication, present on wire 14, is sent to a 6-bit adder SP. According to which adder cell the multiplication result is sent to, different values of coefficient D of relation (2) are obtained. As to the present invention aims, the multiplication result is sent to the cell corresponding to the least significant bit. At the other input of adder SP, connected to connection 16, the result of the preceding sum $\hat{h}^{k-1}$ arrives delayed by a signalling period by delay circuit TD. At the output of SP, on connection 17, the estimated sample of the pulse response of the echo channel, $\hat{h}^k$ by the relation (2), is obtained.

To estimate the echo-signal $\hat{e}$, it now is necessary to implement relation (1). Since the tail slope of the echo pulse-response is very low, the most three significant bits of the six bits associated to $\hat{h}$, are sufficient. All the three bits are used to represent the amplitude, since it tends to 0 always starting from a positive value.

The value of $\hat{h}$, present on connection 17, is multiplied in a multiplying circuit MB by the summation of the transmitted binary signals, present on connection 12, and the result, converted into analog form, is sent via wire 7 to adder SO for the cancellation.

The method has been simulated by taking into account the echo pulse responses measured with N=30. To comparison purposes, the suppression value of an echo canceller with 14 taps, i.e. 7 memory taps and 7 transversal ones, is reported deprived of the invention circuit.

The two results are compared in Fig. 3, where there is also represented the adaptive correction step to render the convergence of the memory part of the canceller faster. The dashed curve relates to the canceller alone, while the solid one comprises also the tail cancelling circuit. In this figure it is also considered the effect of 12-bit D/A converter used in the cancellation.

It is worth noticing that the gain is of about 6 dB, and 55-dB cancellation values can be attained which are indispensable to ensure a correct operation of the system with lines having an attenuation of 40 dB at 100 kHz.

## Claims

1. An echo canceller for bidirectional digital transmission systems, wherein a cancellation is performed of the tails of N digital symbols transmitted on the transmission line (2) in the last N signalling periods, characterized in that it comprises:
- a shift-register (R1,R2,R3...RN), consisting of N cells, to the input of which (4) the signal to be transmitted ($b_k$) is sent, this signal being linearly related (LT) to the coded signal actually transmitted on the line (2);
- a logic circuit (LC) whose inputs are connected to the input of the first cell (R1) and to the output of the last cell (RN) of said shift-register, wherein there are present the signal to be transmitted ($b_k$) and the signal transmitted N signalling periods before ($b_{k-N}$), and whose outputs (10,11) present signals related to the input signals by the truth table:

| $b_k$ | $b_{k-N}$ | 10 | 11 |
|---|---|---|---|
| 0 | 0 | 1 | − |
| 0 | 1 | 0 | 0 |
| 1 | 1 | 1 | − |
| 1 | 0 | 0 | 1 |

- an Up/Down Counter (CS), which can be saturated at the maximum value N, enabled by the signal at one output (10) and controlled to up/down counting by the signal at the other output (11) of said logic circuit (LC);
- a first sign extracting circuit (ES), whose input is connected to the output (12) of said counter to supply the sign of the counting performed;
- a second sign extracting circuit (ET), whose input (8) receives the line signal wherefrom the estimated echo signal (7) has been subtracted;
- a first multiplying circuit (EO), to multiply the signs supplied by said first and second sign extracting circuits (ES, ET);

- a first adder (SP), to add the signal at the output (14) of said first multiplying circuit (EO) to the signal resulting from the addition, delayed by a signalling period by a delay circuit (TD);
- a second multiplying circuit (MB), to multiply the sum signal supplied by said adder (SP) by the signal supplied by said Up/Down counter (CS), the output signal (7) converted into analog form being the estimated echo-signal to be substracted from the signal received on line (2) in a second adder (SO) to obtain the signal deprived of the echo tails.

2. An echo canceller as in claim 1, characterized in that said first multiplying circuit (EO) is an EX-OR gate.

3. An echo canceller as in claim 1 or 2, characterized in that said first adder (SP) supplies a sum expressed with 6 bits.

4. An echo canceller as in any of claims 1 to 3, characterized in that the input (14) to said first adder (SP), externally connected to said first multiplying circuit (EO), is internally connected to the adder cell corresponding to the least significant bit.

5. An echo canceller as in any of claims 1 to 4, characterized in that said second multiplying circuit (MB) operates on the three most significant bits supplied by that adder (SP).

## Revendications

1. Dispositif d'annulation d'écho pour des systèmes de transmission numérique bidirectionnelle où l'on effectue l'annulation des queues de N symboles numériques émis sur la ligne de transmission (2) dans les dernières N périodes de signalisation, caractérisé en ce qu'il comprend:
– un registre à décalage (R1, R2, R3, ... RN) composé de N cellules, à l'entrée (4) duquel on envoie le signal à transmettre ($b_k$) lié par une relation linéaire (LT) au signal codé réellement émis sur la ligne (2);
– un circuit logique (LC), dont les entrées sont connectées à l'entrée de la première cellule (R1) et à la sortie de la dernière cellule (RN) dudit registre à décalage, dans lequel sont présents le signal à transmettre ($b_k$) et le signal transmis N périodes de signalisation avant ($b_{k-N}$), et dont les sorties (10, 11) présentent des signaux qui sont liés aux signaux d'entrée par la table de verité suivante:

| $b_k$ | $b_{k-N}$ | 1 0 | 1 1 |
|-------|-----------|-----|-----|
| 0 | 0 | 1 | - |
| 0 | 1 | 0 | 0 |
| 1 | 1 | 1 | - |
| 1 | 0 | 0 | 1 |

– un compteur-décompteur (CS), qui peut être saturé à la valeur maximale N, validé par le signal à une sortie (10) et commandé à compter en avant ou en arrière par le signal à l'autre sortie (11) dudit logique (LC);
– un premier circuit extracteur de signe (ES), dont l'entrée est connectée à la sortie (12) dudit compteur pour fournir le signe du comptage effectué;
– un deuxième circuit extracteur de signe (ET), dont l'entrée (8) reçoit le signal de ligne dont on a soustrait le signal d'écho estimé;
– un premier circuit multiplicateur (EO) pour multiplier entre eux les signes fournis par lesdits premier et deuxième circuits extracteurs de signe (ES, ET);
– un premier additionneur (SP) pour additionner le signal à la sortie (14) dudit premier circuit multiplicateur (EO) au signal qui résulte de l'addition retardé d'une période de signalisation par un circuit de retard (TD);
– un deuxième circuit multiplicateur (MB) pour multiplier le signal de somme fourni par ledit additionneur (SP) par le signal fourni par ledit compteur-décompteur (CS), le signal de sortie (7), converti sous la forme analogique, étant le signal d'écho estimé à soustraire reçu sur la ligne (2) dans un second additionneur (SO) pour obtenir le signal exempté des queues de l'écho.

2. Dispositif selon la revendication 1, caractérisé en ce que le premier circuit multiplicateur (EO) est une porte OU exclusif.

3. Dispositif selon la revendication 1 ou 2, caractérisé en ce que ledit premier additionneur (SP) fournit une somme exprimée sur six bits.

4. Dispositif selon l'une quelconque des revendications 1 à 3, caractérisé en ce que l'entrée (14) audit premier additionneur (SP), connectée à l'extérieur audit premier circuit multiplicateur (EO), est connectée à l'intérieur à la cellule de l'additionneur correspondante au bit le moins significatif.

5. Dispositif selon l'une quelconque des revendications 1 à 4, caractérisé en ce que ledit deuxième circuit multiplicateur (MB) opère sur les trois bits les plus significatifs fournis par ledit additionneur (SP).

**Patentansprüche**

1. Echokompensator für Duplex-Digitalübertragungssysteme, bei dem eine Kompensierung von Echoausläufern von N digitalen Symbolen, die in den letzten N Signalisierungsperioden auf der Übertragungsleitung (2) übertragen wurden, durchgeführt wird, gekennzeichnet durch
– ein aus N Zellen bestehendes Schieberegister (R1, R2, R3 ... RN), an dessen Eingang (4) das zu sendende Signal ($b_k$) gegeben wird, das auf das kodierte tatsächlich auf der Leitung (2) gesendete Signal linear bezogen ist (LT);
– eine logische Schaltung (LC), deren Eingänge mit dem Eingang der ersten Zelle (R1) und mit dem Ausgang der letzten Zelle (RN) des Schieberegisters verbunden sind, in denen das zu sendende Signal ($b_k$) und das um N Signalisierungsperioden früher gesendete Signl ($b_{k-N}$) vorliegen, und deren Ausgänge (10, 11) Signale abgeben, die auf die Eingangssignale gemäß der folgenden Wahrheitstabelle bezogen sind:

| $b_k$ | $b_{k-N}$ | 10 | 11 |
|-------|-----------|----|----|
| 0 | 0 | 1 | – |
| 0 | 1 | 0 | 0 |
| 1 | 1 | 1 | – |
| 1 | 0 | 0 | 1 |

– einen Auf- und Ab-Zähler (CS), der am Maximalwert N sättigbar ist, durch das Signal am einen der Ausgänge (10) der logischen Schaltung (LC) einschaltbar ist und zum Aufwärtszählen und Abwärtszählen durch das Signal an deren anderem Ausgang (11) gesteuert ist;
– eine erste Vorzeichenextrahierschaltung (ES), deren Eingang mit dem Ausgang (12) des Zählers verbunden ist, zum Liefern des Vorzeichens der durchgeführten Zählung;
– eine zweite Vorzeichenextrahierschaltung (ET), deren Eingang (8) das Leitungssignal empfängt, von dem das geschätzte Echosignal (7) subtrahiert worden ist;
– eine erste Multiplizierschaltung (EO) zum Multiplizieren der von der ersten und der zweiten Vorzeichenextrahierschaltung (ES, ET) gelieferten Vorzeichensignale miteinander;
– einen ersten Addierer (SP) zum Addieren des am Ausgang (14) der ersten Multiplizierschaltung (EO) auftretenden Signals mit dem aus der Addition resultierenden und durch eine Verzögerungsschaltung (TD) um eine Signalisierungsperiode verzögerten Signal;
– eine zweite Multiplizierschaltung (MB) zum Multiplizieren des vom Addierer (SP) gelieferten Summensignals mit dem vom Auf- und Abzähler (CS) gelieferten Signal, wobei das in analoge Form umgesetzte Ausgangssignal (7) das geschätzte Echosignal ist, das von dem auf der Leitung (2) empfangenen Signal in einem zweiten Addierer (SO) zu subtrahieren ist, um das von den Echoausläufern befreite Signal zu erhalten.

2. Echokompensator nach Anspruch 1, dadurch gekennzeichnet, daß die erste Multiplizierschaltung (EO) ein ODER-Exclusiv-Glied ist.

3. Echokompensator nach Anspruch 1 oder 2, dadurch gekennzeichnet, daß der erste Addierer (SP) eine mit 6 Bit ausgedrückte Summe liefert.

4. Echokompensator nach einem der Ansprüche 1 bis 3, dadurch gekennzeichnet, daß der extern mit der ersten Multiplizierschaltung (EO) verbundene Eingang (14) des ersten Addierers (SP) intern mit der dem Bit geringster Wertigkeit entsprechenden Addierer-Zelle verbunden ist.

5. Echokompensator nach einem der Ansprüche 1 bis 4, dadurch gekennzeichnet, daß die zweite Multiplizierschaltung (MB) auf die drei vom ersten Addierer (SP) gelieferten Bits höchster Wertigkeit arbeitet.

FIG. 1

FIG. 3

FIG.2